# EUROPEAN PATENT APPLICATION

(11) **EP 4 216 526 A1**
(43) Date of publication of application: **26.07.2023**
(21) Application number: 23152151.9
(22) Date of filing: 18.01.2023
(51) Int. Cl.: H04M 9/08

(54) **DEVICE WITH OUTPUT TRANSDUCER AND INPUT TRANSDUCER**

(30) Priority: 20.01.2022 EP 22152549
(71) Applicant: EPOS Group A/S, 2750 Ballerup (DK)
(72) Inventor: FELDT, Svend, 2750 Ballerup (DK); HANSEN, Anders Røser, 2750 Ballerup (DK); PETRI, Stig, 2750 Ballerup (DK); HESTBEK, Poul Peder, 2750 Ballerup (DK); FYNSK, Casper, 2750 Ballerup (DK)
(74) Representative: Demant

(57) **Abstract**

The present disclosure relates to a device having an output transducer and an input transducer, wherein the device is configured to be operated so as to reduce or cancel signal content that is output via the output transducer in the input transducer signal.

## Description

The present disclosure relates generally to the field of digital voice communications. Also, the present disclosure relates to a device configured for use in the field of digital voice communications. The present disclosure relates to a device configured to be used as part of a communications system. More particularly, the disclosure relates to devices having an output transducer and an input transducer, wherein the device is configured to pick-up environment sound and output a signal from an external source, such as in a phone call or soft phone call. The device could be a speakerphone or videophone as outlined and detailed below.

When using a device having both an output transducer and an input transducer in the same housing, or at least in very close proximity, and the input transducer is primarily use for picking up speech from the environment around the device, there is a need to treat the input signal before transmitting it to a remote receiver, e.g. another party in a conference call or video conference or the like.

The present disclosure provides at least an alternative to the prior art. Further, the present disclosure aims to provide a device having improved echo cancelling performance or at least alternative echo handling capabilities.

### SUMMARY

The present disclosure in general relates to devise having an output transducer and an input transducer located in close proximity thereof. The present disclosure provides a device that can be either part of a speakerphone device or a videophone device, i.e. a device incorporating visual and audio input which is transmitted to a far end speaker while reproducing audio received from the far end. Examples of such devices will be given below. The teachings reading echo handling is considered to apply equally to both types of devices.

In devices used for conference calls, with or without video, echo perceived by the far end user is the dominating impairment to have a natural conversation. What is rendered by the speaker of the device is picked up by the input transducer system and returned to the far end as echo.

One way of treating feedback from an output transducer to an input transducer located in close proximity during a conversation with a remotely placed caller could be a so-called acoustic echo canceller AEC. One of the main limitations of the AEC is that it can only remove linear portions of the echo. Especially in speakerphones, a significant portion of the echo is often non-linear.

One way of doing echo cancellation in a speakerphone situation may include the following steps:
- A far-end signal is delivered to the system.
- The far-end signal is reproduced.
- The far-end signal is filtered and delayed to resemble the near-end signal.
- The filtered far-end signal is subtracted from the near-end signal.
- The resultant signal represents sounds present in the room excluding any direct or reverberated sound originating from the output transducer of the speakerphone itself.

When the AEC is not enough to solve the task of suppressing the unwanted acoustic signal, squelching is often used. Squelching refers to (partially) muting the microphone when the speaker is playing. Despite this being a very effective method to remove the echo it also makes it difficult for the user of the speakerphone to interrupt the far-end speaker. The system is essentially reduced from a duplex system to a simplex system. The ability to interrupt each other during telecommunication is often referred to as "double talk". Echo and reduced double talk are important metrics for such systems. Generally, echo is perceived as being unacceptable for a conversation, whereas reduced double talk is highly inconvenient. This results in most systems being tuned in a way where no to little echo exist but having degraded double talk performance. Double talk performance can therefore be a measure for how well a given system handles echo.

A speakerphone may be used on its own e.g. in a housing holding input transducer, output transducer and connection device for receiving and transmitting information to be rendered by the device and to be transmitted to a far-end speaker. The speakerphone may be implemented as part of a video conferencing system, e.g. in a housing further comprising video recording and/or display equipment. This could e.g. be in the shape of a bar comprising an optical sensor, such as a camera device, a speaker device and a microphone device. Other formfactors may be utilized.

According to an aspect, the present disclosure provides a device comprising an input transducer and an output transducer and may further comprise a housing. The device may be configured so that the input transducer comprises a first set of microphones and a second set of microphones, and the input transducer may be arranged in the housing. The input transducer, or input transducer system may comprise two or more microphone units. The constituents of the input transducer may be arranged in the same housing, or, in the alternative, at least one of the first and/or second set of microphones may be arranged in a separate housing. The housing may be configured to be positioned on a substantially flat, horizontal surface, such as a table. Alternatively, the housing may be configured to mounted to a wall, such as to hang from a wall, or attached to/hanging from a ceiling, or to be attached to a further device, such as a display device, such as a TV, videoconferencing screen or computer screen. In the device, the output transducer may be arranged in the housing. The output transducer may be configured to provide an acoustic signal based on a signal received from an external source. This far-end source could be a remote speaker in a telephone or video conference. The signal from the external source may be received via the Internet or a phone network. The external source may be a far-end speaker in a phone call, conference call or video conference call. In the device, two of the first set of microphones may be arranged along a first microphone axis. In the device, two of the second set of microphones may be arranged along a second microphone axis. The first set of microphones may include at least two microphones, such as two, such as three, such as four or more microphones. The second set of microphones may include at least two microphones, such as two, such as three, such as four or more microphones. Either one or both of the first and second set of microphones may be arranged as line arrays. Preferably, the first set of microphones and the second set of microphones has at least one non-shared microphone. The device may further comprise a cancellation controller configured to adaptively control a combination of individual signals from the set of microphones of the first set of microphones, so as to adapt a first cancellation pattern, based on a combination of signals from the set of first microphones, in order to obtain a resulting signal having minimized signal content from the output transducer. In general, the cancellation pattern comprises at least one null from where the input transducer receives less signal compared to other directions. The microphones may be configured to convert an acoustic signal to an electrical signal. The microphones may be configured to convert the electrical signal from an analogue signal to a digital signal, either on its own or via an external converter device. The cancellation controller may be configured to perform similar actions based on signals from the second set of microphones. If further sets of microphones are included or connected to the device, the cancellation controller may be further configured or adapted to perform similar actions on these signals as well. Further, or alternatively, the cancellation controller may be embodied by several, independent controllers each configured to perform these actions on signals from a respective set of microphones.

The signal(s) from the microphones may be provided to a processor configured to process the sound as the above-mentioned cancellation controller. This may be a processor which also include other type of sound processing, such as noise cancellation and/or noise reduction and/or filtering and/or providing gain in one or more frequency bands. When more than one set of microphones are present in the device, several processors may be included in the device. Such multiple processors may be established as individual, physical devices or may be established as parts of a larger physical device with individually defined processing paths. Other configurations may be envisioned.

The device according to the present disclosure may preferably be configured so that the cancellation controller adapt and control the cancellation of the first set of microphones so as to achieve minimum input from output transducer, i.e. reduce the amount of signal originating from the output transducer in the input signal from the set of microphones, which mean that the amount of echo is reduced in the signal provided to a far-end speaker.

The device may be configured so that the cancellation controller adaptively controls a combination of individual signals from the set of microphones of the second set of microphones so as to adapt a second cancellation pattern, being located differently from the first cancellation pattern, based on a combination of signals from the set of second microphones, in order to obtain a second resulting signal having minimized signal content from the output transducer. Similar to the first set of microphones, the second set of microphones may be used to establish a second cancellation pattern. As the second set of microphones should not be identical to the first set of microphones, i.e. the second set of microphones include at least one microphone which is not part of the first set of microphones, this second pattern will be located at a different location at the device. Therefore, the signal from the second set of microphones provide a second opportunity to reduce the amount of signal from the output transducer while at the same time providing a different coverage of sound from the environment of the device.

In the device according to the present disclosure, the cancellation controller may be configured to reduce an adaptivity rate of adapting the cancellation when speech is detected in one or more microphone signals. The speech in this connection could be termed near-end speech. Near-end speech could be speech originating in the same room as the device is placed in. An adaptation rate, e.g. a rate used in an adaptive filter as part of the cancellation controller, may be changed based on current sound conditions at the device. Such conditions could include the detection of speech from a person near the device. One option could be that when a person in the same room as the device is speaking, the likelihood of a person at the far-end is also speaking is reduced and consequently the signal in the output transducer would be low, which further could allow the device to shift to a more omni-directional mode of operation, thereby potentially increasing the signal amount from the person speaking. The adaptation rate could be reversed in the sense that the device gradually shifts from a directional mode towards an omni-directional mode when it is detected that a person near the device is speaking. In this connection there could be several persons near the device, e.g. several persons in a meeting room, and at least one of these persons speaking could be considered as 'near' the device,

In the device according to the present disclosure, the cancellation controller may be configured to adapt the signal from the set of microphones when a signal is rendered via the output transducer. One way could be to detect an increase in output signal power/strength which could be indicative of a far-end person is speaking, and thus it could be beneficial that the amount of signal from the output transducer is reduced in the input signal, thereby reducing or removing echo for the far-end speaker. The intensity or power detection could also be or include a voice activity detection. The signal rendered could be classified as relevant or non-relevant based on an analysis of the signal before or while it is being rendered by the device. The rendered signal could be characterized by level, either overall level or in one or more bands.

In the device according to the present disclosure, the second microphone axis may be orientated non-parallel with the first microphone axis. The first microphone axis may, alternatively, be parallel to the second microphone axis. The first microphone axis may be non-parallel to the second microphone axis, such as in the range of more than zero degrees to less than 180 degrees, such as around 90 degrees, such as around 60 degrees, such as around 45 degrees, such as around 30 degrees, such as in the range of 10 to 90 degrees, such as in the range of 90 to 180 degrees, such as 40 to 120 degrees, such as about 90 degrees.

In the device according to the present disclosure the first set of microphones and the second set of microphones comprise at least one common microphone or does not comprise any common microphones. This could for instance be a device comprising three microphones, where one microphone is part of both the first set and the second set, such as each of the first and second set is made up of two microphones. A device could comprise four microphones, where the first set is made up of two microphones and the second set is made up of the other two microphones so that the two sets of microphones do not share any microphones between them. In other configurations with multiple microphones, such as more than 4 microphones, each set may comprise more than two microphones. This could for instance be a device having 6 microphones, where the first set comprises three microphones and the second set comprises 2, 3, 4, 5 or even 6 microphones. The groups or sets of microphones may be arranged e.g. at opposite ends of a device having an elongate shaped housing.

In the device according to the present disclosure, the cancellation controller may be configured to adapt cancellation or directivity based on a correlation calculation between one or more microphone signals and a signal provided to the output transducer. The correlation calculation could be based on a stored/buffered version of the signal output via the output transducer. Another measure could be spectral power comparison between the signals. Other types of comparisons may be used as part of the controlling of the cancellation.

In the device according to the present disclosure, at least one of the microphones of the set of microphones may be located closer to the output transducer than the at least other microphone(s) of the set and the device may further comprise an adaptive filter configured to process the signal from the closer microphone to ensure the amplitude of the microphone signals are equal. In a device having at least two microphones with different distances to the output transducer, it is possible to apply a compensation so that the one of the microphones being closer to the output transducer than the other(s) is not too dominant when cancelling the signal from the output transducer in order to pick up sound from the environment. In such a configuration, the person(s) in the same room as the device are considered to be "far away" from the microphones, at least compared to the output transducer, and due to the inverse square law, the amplitude difference on the microphones will be insignificant compared to the difference experienced from the output transducer/speaker. For the adaptation to be efficient in canceling the contribution from the speaker, the adaptive filter should incorporate a significant attenuation to the signal from the nearer microphone or gain to the other microphone(s), to ensure the amplitude of the signal received or registered by the microphones are mostly or completely equal prior to subtraction. As the distances between speaker and microphones are significantly lower than the distances to the wanted speech, it can be shown that this array type implements a canceling "point" and not a canceling plane.

In the device according to the present disclosure, in the speakerphone housing, the first microphone axis may be arranged perpendicular to the second microphone axis. As discussed above, this may provide a degree of symmetry that further alleviates the cancellation of the output transducer.

In the device according to the present disclosure, the output transducer may define a output transducer center, and, wherein the output transducer may then be arranged so that a first line drawn through the output transducer center is perpendicular to the first microphone axis and perpendicular to the second microphone axis. When the output transducer is arranged like this, e.g. on-axis with the microphone pairs, and an adaptive bidirectional method may be used to ensure optimal cancellation of the speaker signal. The output transducer may alternative be placed out of line with an intersection between a line perpendicular to the first microphone axis and a line perpendicular to the second microphone axis. As it is also possible to move/locate the output transducer away from the directional characteristics of the first set of microphones' "natural" plane of cancellation, an adaptive method may be used to fine-tune the directional characteristics of the first and/or second set of microphones when the output transducer is playing.

As disturbing signals in the input transducers occur not only from direct signals from the output transducer, but also from structural vibrations in the housing or housing parts or other structures arranged therein. Disturbances via vibrations though the housing is a concern especially for such relatively small devices as disclosed herein, in particular for speakerphones, where a large output transducer provides a significant sound output, which is easily picked up by a closely located input transducer/microphone. Thus, the echo cancelling function is important to the operation of such a device.

In the device according to the present disclosure, the housing could have a circular geometry, where the output transducer is positioned at the center of the circle. The input transducer, in the form of the individual microphones, could then be distributed around a periphery of the circular geometry. The microphones could be distributed with a fixed angle between them seen from the center of the circular geometry. The housing may, alternatively, have an oblong or rectangular shape. The housing may, alternatively, have a hexagonal shape or other polygonal shape. The housing may in any case have rounded corners or more sharp corners.

In the device according to the present disclosure, the device may comprise three microphones arranged in a triangular pattern where the output transducer is positioned near the center of the triangle.

In the device according to the present disclosure, the device may comprise 6 microphones arranged around the output transducer, where the microphones are spaced with 60 degrees between neighboring microphones.

In the device according to the present disclosure, the device may comprise 6 microphones arranged spaced with 60 degrees between neighboring microphones. The output transducer may then be positioned somewhere in the space defined within the microphones. A smaller part of the output transducer may be outside

According to a second aspect, the present disclosure provides a method of operating a device having a housing wherein an input transducer and an output transducer is arranged, the input transducer comprising a multitude of microphones. The device may further comprise a cancellation controller operationally connected to one or more of the multitude of microphones. The method may comprise a step of, from the multitude of microphones, defining a first set of microphones. The method may comprise a step of from the multitude of microphones, defining a second set of microphones. The steps of defining one or both sets of microphnes may be performed during design of the device, either one fixed definition or at least defined for a number of operational modes. Alternatively, the set or sets may be defined based on current operational characteristics, such as sound properties, such as output sound properties or ambient sound properties. The method may comprise that the first set and the second set of microphones being defined so that wherein two of the first set of microphones are arranged along a first microphone axis and two of the second set of microphones are arranged along a second microphone axis. As has been and will be discussed, these axes may be arranged at different angles relative to each other. The method may comprise a step of operating the cancellation processor to provide an output signal based on a combination of individual signals from the first set of microphones, wherein the operation of the cancellation processor comprises minimizing the energy from the output transducer, thereby providing a first cancellation pattern having minimized signal content from the output transducer. This step may be repeated during operation, e.g. based on the present sound being output from the output transducer.

In the context of the present disclosure, the terms "speakerphone" and "videophone" is taken to mean an communication device capable of recording audio from the environment that the device is placed in and that may be connected directly or indirectly to a communication network and that allows a local party, possibly comprising a plurality of party members, to simultaneously communicate orally with one or more remote parties via the communication network.

### BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
Fig. 1 schematically illustrates a polar plot of a bidirectional microphone,
Fig. 2 schematically illustrates nulling plane of a bidirectional microphone,
Fig. 3 schematically illustrates an implementation of a bidirectional input transducer comprising two microphones,
Fig. 4 schematically illustrates an implementation of an adaptive bidirectional input transducer comprising two microphones,
Fig. 5 schematically illustrates an implementation of an adaptive difference canceller transducer comprising two microphones,
Fig. 6 schematically illustrates a device having a single speaker and two pairs of microphones,
Fig. 7 schematically illustrates a similar device as Fig. 6, where the output transducer is shifted relative to the bidirectional axes of the two microphone pairs,
Fig. 8 schematically illustrates a device having a single output transducer arranged in an elongated housing with two pairs of microphones around the output transducer,
Fig. 9 schematically illustrates a device having an output transducer and three microphones arranged in a triangular pattern,
Fig. 10 schematically illustrates a device having 6 microphones arranged in a pattern around an output transducer,
Fig. 11 schematically illustrates device having two output transducers and four microphones,
Fig. 12 schematically illustrates device having two output transducers and four microphones, where one set of microphones are shifted,
Fig. 13 schematically illustrates a device having an output transducer and an input transducer and an auxiliary device having an auxiliary input transducer,
Fig. 14 schematically illustrates a device having an output transducer and an input transducer and two auxiliary device each having an auxiliary input transducer,
Fig. 15 schematically illustrates a device having two output transducers and an input transducer comprising two microphones arranged between the two output transducers,
Fig. 16 schematically illustrates a device having two output transducers and an input transducer comprising two microphones arranged between the two output transducers where one microphone is arranged at a front of the device,
Fig. 17 schematically illustrates a number of 3D nulling planes,
Fig. 18 schematically illustrates a videophone device, and
Fig. 19 schematically illustrates steps of a method according to the present disclosure.

### DETAILED DESCRIPTION

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include micro-electronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

In the present description, it is intended that an input transducer is the term used for the concept of converting acoustic signals to an electrical signal, and that the input transducer may be established using signals from one, two or more microphones.

The input unit may include multiple input microphones, where two or more individual signals may be combined e.g. for providing direction-dependent audio signal processing.

Such directional microphone system is adapted to (relatively) enhance a target acoustic source among a multitude of acoustic sources in the user's environment and/or to attenuate other sources (e.g. noise). In one aspect, the directional system is adapted to detect (such as adaptively detect) from which direction a particular part of the microphone signal originates. This may be achieved by using conventionally known methods. The signal processing unit may include an amplifier that is adapted to apply a frequency dependent gain to the input audio signal. The signal processing unit may further be adapted to provide other relevant functionality such as compression, noise reduction, etc. The output unit may include an output transducer such as a loudspeaker/ receiver for providing an air-borne acoustic signal

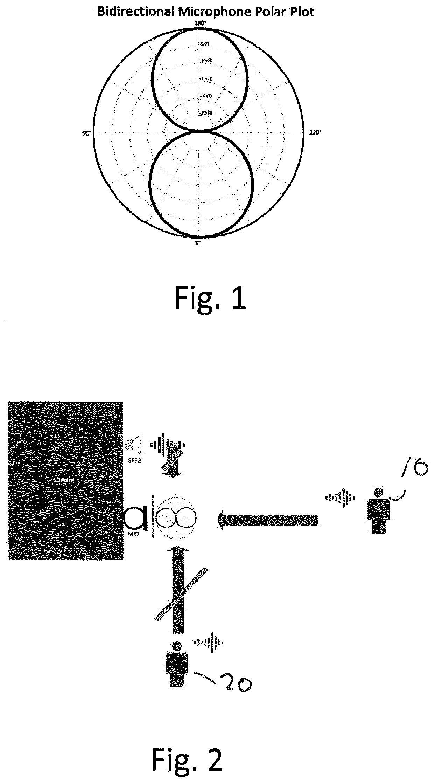

Now referring to Fig. 1, which illustrates a polar plot of a bidirectional input transducer. Implementing a bidirectional transducer which has the polar pattern shown in Fig. 1 may establish an input transducer which effectively cancel any source in the "nulling plane". The Nulling plane is perpendicular to the plane of the drawing of Figure 2 and constrained by the line from 90° to 270°.

Placing the output transducer, also referred to as the speaker, in this plane will significantly lower the amount of speaker originated audio picked up by the input transducer. This "nulling plane" will cancel linear and nonlinear components alike. One downside of this is that it will at the same time cancel any source in that nulling plane, including wanted speech or sound. This is illustrated in Fig. 2.

Fig. 2 schematically illustrates how the nulling plane of a bidirectional microphone, i.e. a bidirectional input transducer work. Further, Fig. 2 illustrates that sound/speech originating from person 10 is received/recorded by the bidirectional input transducer, whereas sound/speech originating from person 20 is in the nulling plane and thus not received/recorded by the bidirectional input transducer.

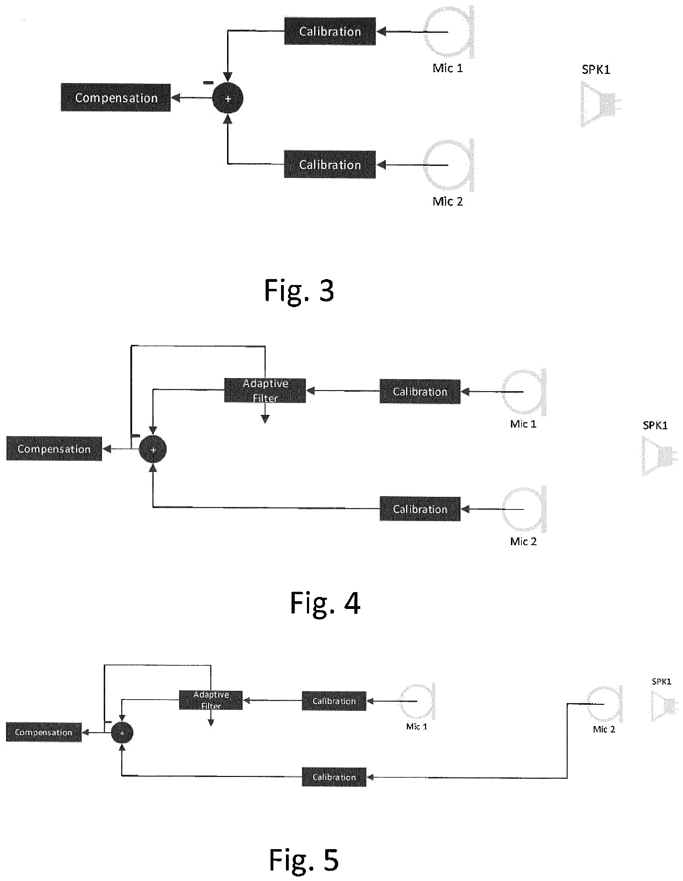

Fig. 3 schematically illustrates an implementation of a bidirectional input transducer comprising two microphones, that is, Fig. 3 schematically illustrates one possible configuration of a bidirectional input transducer comprising two microphones, Mid and Mic2. The setup further comprises two calibration circuits - to make the microphones similar. This block can be omitted at the cost of performance or simply because of microphones and mechanics could be considered very similar. An addition circuit, that subtracts the two signals from each other. A compensation circuit that corrects any unwanted impact on the signal that the bidirectional input transducer has caused.

Fig. 4 schematically illustrates an implementation of an adaptive bidirectional input transducer comprising two microphones. Fig. 4 schematically illustrates components of an improved method compared to the method discussed above. In the figure, an adaptive bidirectional input transducer comprising two microphones, such as a set of two microphones, is illustrated. A block has been added, that manipulates the amplitude and phase of one of the microphones before subtraction. This block could take the form of a filter. The filter optimization could be a steepest decent-like algorithm, but the method for optimization is not crucial. The result of the optimization should minimize the energy at the output of the subtraction when the speaker is playing/rendering sound. This will effectively adjust the filter to a solution very similar to the method discussed above, but would be capable of modeling imperfections in microphone calibration and surrounding acoustics.

There could be other conditions for adaption than the active speaker. Another situation could be during double talk. In a double talk situation, the speaker will be playing, while the person using the device, either being a speakerphone or videophone, is talking as well. The microphones will pick up both signals. The goal of the device is to cancel the speaker signal, i.e. the signal from the output transducer, and convey the user's speech to the far end recipient, but it is important to realize that the user's speech in this situation is considered noise to the adaption algorithm. Hence stopping or slowing down adaption during double talk is most likely needed.

In Fig. 4 the calibration circuit is maintained, compared to Fig. 3, but could be omitted. It might be worth doing an initial calibration at production to ensure not to use the adaptive filters complexity on trivial tasks but to "save" it for more complex tasks as acoustics and ageing.

To have good performance, meaning in this context a high attenuation of the speaker signal in the output of the microphones, the microphones should be calibrated to have same frequency response. Also, the acoustics surrounding the microphones and the speaker need to be symmetric. Any flaws in the symmetry will result in degraded performance. Not only does it need to be produced with symmetric microphone performance, but it must also remain as such during the lifespan of the product. As we require echo attenuation of 20-40dB the required symmetry requirements are high, rendering this method suboptimal for practical use.

Fig. 5 schematically illustrates an implementation of an adaptive difference canceller transducer comprising two microphones.

In Fig. 5, a method to avoid cancelling an entire plane is illustrated. This involves physically arranging the microphones of the input transducer in a different relation to the speaker compared to e.g. Fig. 4, where in Fig. 5 Mic2 is closer to the output transducer SPK1 than the microphone Mid. In Fig. 5, the microphones Mid and Mic2 are positioned in a line from the speaker SPK1. The microphone Mic2 closest to the speaker SPK1 will receive a significantly higher signal than the second microphone Mid. This is true because the microphones in this configuration are in the near field of the source (the speaker). This is usually called "The inverse square law". This states that the sound pressure is reduced with the square of the distance. When being very close to the source the impact of this is significant which is exploited in this method/configuration.

The users/persons speaking in the room are considered to be "far away" from the microphones (compared to the output transducer) and, due to the inverse square law, the amplitude difference on the microphones will be insignificant compared to the difference experienced from the speaker/talker.

The circuity illustrated in Figs. 4 and 5 are the same, while the microphones are rearranged in relations to each other and the speaker. One thing to note is, that when moving the microphone closer to the speaker it could become important to safeguard against saturation of the microphone/input transducer.

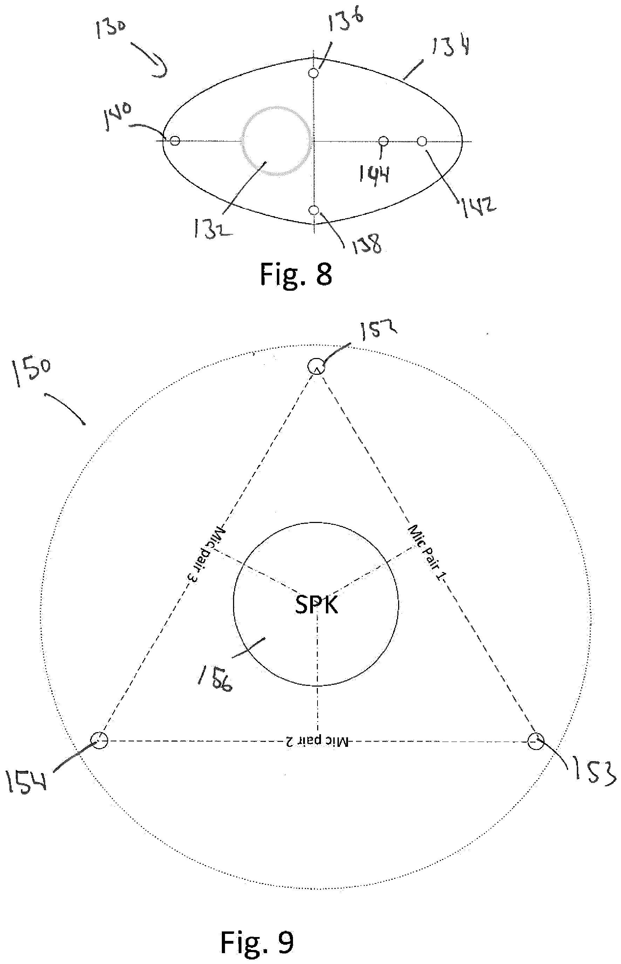

For the adaptation to be efficient in canceling the contribution from the speaker, the adaptive filter should incorporate a significant attenuation (to ensure the amplitude of the speaker signal are equal) before subtraction. As the distances between speaker and microphones are significantly lower than the distances to the wanted speech, it can be shown that this array type implements a canceling "point" instead of a canceling plane as was the case in Figs. 2 and 3. The arrangement of Fig 3 has one significant advantage over more standard directional approaches, namely that the far field polar plot arising from the configuration in Fig. 5 approximate an "omni pattern" in contrast to the "figure 8" pattern of a Bidirectional setup as illustrated e.g. in Fig. 3.

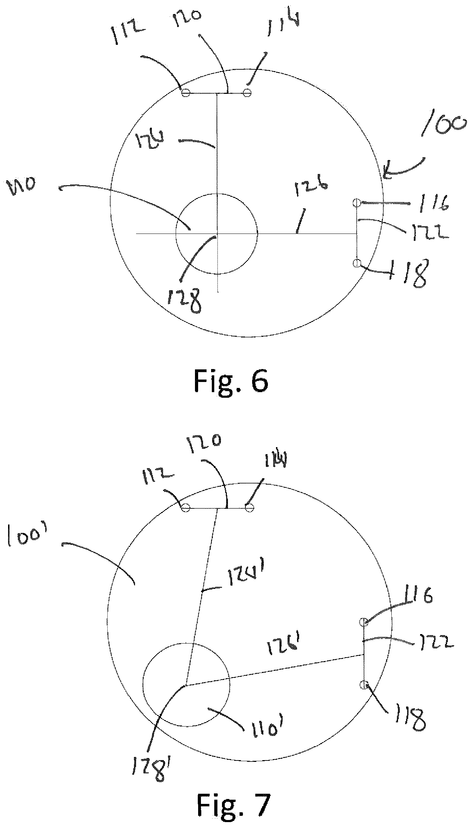

Fig. 6 schematically illustrates a device having a single speaker and two pairs of microphones. The outline of the housing for the device of Fig. 6 has the shape of a circle. Other geometries may be envisioned, such as rectangular, square, hexagonal or any other shape. The housing may have sloping sides that has reduced height at the sides relative to a center point. The housing is preferably relatively small and suitable for being moved, e.g. when not used in a meeting room or the like. The housing may have a bottom surface configured to be positioned on a tabletop or the like relatively flat surface. As mentioned, the device according to the present disclosure may be part of a housing configured to be hung from a wall or ceiling.

In Fig. 6, a way to avoid creating an entire cancelling plane is achieved by the configuration illustrated. In the device 100 of Fig. 6, two, separate, cancelling beamformers are established via two sets of microphones 112, 114, 116, 118, a first set comprising two microphones 112, 114, and a second set comprising two microphones 116, 118. The first set of microphones 112, 114 are arranged so that they establish a first microphone axis 120. The second set of microphones 116, 118, are arranged so that they establish a second microphone axis 122. The first microphone axis 120 is arranged perpendicular, or at least substantially perpendicular, to the second microphone axis 122. Diverging angles may be compensated via an adaptive filter as will be discussed below. This could e.g. be due to manufacturing tolerances, or by deliberate configuring the device differently. The output transducer 110 define a center 128 where the two lines 124 and 126 cross.

In Fig. 6, the speaker 110 is on-axis with the microphone pairs, and the adaptive part of the method as discussed in relation to Fig. 4 may be implemented to ensure optimal cancellation of the speaker signal in the microphone 1112, 114, 116, 118 signals. The two Bi-DIRs established by the first and second set of microphones will have perpendicular planes of cancellation and may be combined to provide an optimal, or near-optimal, version of the user's own voice (e.g., by selecting the best of them based on a SNR estimate of the user's voice in each of the two Bi-DIRs, full-band or different over time and frequency).

As illustrated in the device 100' in Fig. 7, it is possible to locate/arrange the speaker 110' away from the Bi-DIRs "natural" planes of cancellation if the adaptive as discussed in relation to Fig. 4 may be implemented to fine-tune the Bi-DIRs when the speaker is playing. In that case, the planes of cancellation will move, and no longer be perpendicular. If a significant overlap between the main lobes and planes of cancellation between the two Bi-DIRs are maintained, this should not cause a noticeable drop in performance. There is a natural trade-off between performance and freedom of placement. The speaker distortion however will be removed even for steeper angles, whereas the attenuation of the distortion from the microphones will suffer. Any asymmetric placement will also reduce the attenuation of structural born signals.

In relation to Fig. 7, the output transducer 110' defines an output transducer center. The output transducer is arranged so that a first line 124' drawn through the output transducer center 128' is non-perpendicular to the first microphone axis 120 and also non-perpendicular to the second microphone axis 122.

The output transducer 110' may be arranged so that just one of the two lines 124, 126 perpendicular to the microphone axes pass through the center 128 of the output transducer 110.

Basically, both Fig. 6 and Fig. 7 may be seen as implementing a device comprising an input transducer system and an output transducer. The input transducer is in both cases constituted by two sets of two microphones. The device comprises a housing. The input transducer system has a first set of microphones and a second set of microphones. The input transducer is here arranged in the housing. The output transducer is also arranged in the housing, and the output transducer configured to provide an acoustic signal received from an external source. The external source could be a far-end speaker in a conference call, e.g. obtained via a softphone or the like. In both Fig. 6 and 7, two of the first set of microphones are arranged along a first microphone axis, and two of the second set of microphones are arranged along a second microphone axis. The device further comprises a cancellation controller, not illustrated directly in the figures, which is configured to adaptively control a combination of individual signals from the set of microphones of the first set of microphones so as to adapt a first cancellation pattern, based on a combination of signals from the set of first microphones, in order to obtain a resulting signal having minimized signal content from the output transducer.

Fig. 8 schematically illustrates a device 130 having a single output transducer 132 arranged in an elongated housing 134 with five microphones 136, 138, 140, 142, 144 positioned around the output transducer 132. Here the microphones 136 and 138 could be seen as a natural pair of microphones. The microphones 140 and 144 could be seen as another narual pair of microphones, where the microphone 142 could be seen as a further microphone that could form part of either of the set of microphones.

The device in Fig. 8 has a more oblong outline, which could be a rectangularly shaped housing with rounded corners. In this configuration, another possible variation is illustrated. The configuration show that it is possible to locate the microphones of a given pair/set to each side of the speaker, and still create a Bi-DIR cancellation plane. From the above example, the "natural" pairs of microphones are 136 and 138 is one group of set and 140 and 144 the other set as these each form the "natural" good pairs, however it is possible to use any combination with varying performance. Depending on actual distances new interesting beamformers can be realized, even the beamformer from the method and configuration as discussed in relation to Fig. 3, 4, and 5 above.

Fig. 9 schematically illustrates a device having an output transducer and three microphones arranged in a triangular pattern. Here the sets of microphones may share one microphone so that a first set may be defined by the microphones 152 and 153. A second set of microphones may be defined by the microphones 153 and 154. A third set of microphones may be defined by the microphones 154 and 152. The device 150 may be configured so as to operate based on one set of microphones at any one given point in time. The device 150 may be configured so as to operate based on two sets of microphones at any one given point in time. The device 150 may be configured so as to operate based on three sets of microphones at any one given point in time. E.g. in one mode of operation, the number of sets of microphones used at any one point in time may be different from an earlier point in time.

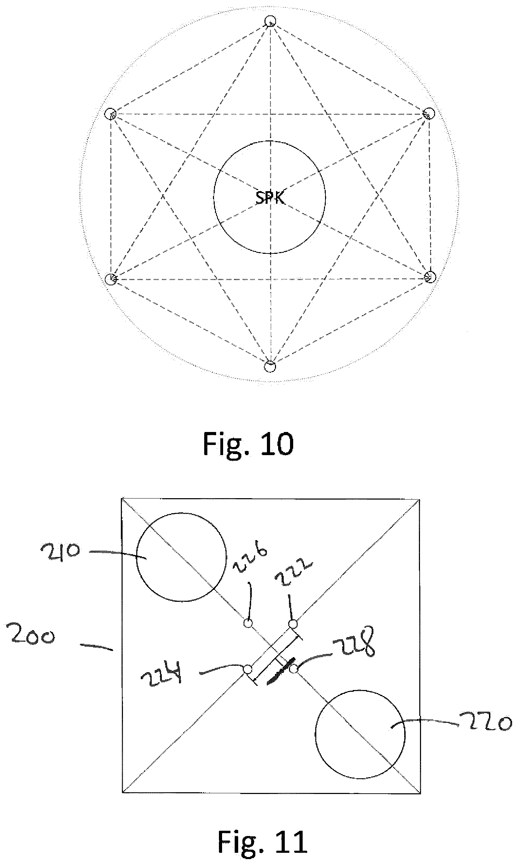

Fig. 10 schematically illustrates a device having 6 microphones arranged in a pattern around an output transducer. As each of the six microphones may be combined with one or more of the other microphones, a large number of possible sets of microphones may be established. As with the device in Fig. 9, the set of microphones being used at any one point in time may be chosen dynamically, e.g. as a function of current ambient and/or output conditions. In other configurations with similar number of microphones, the angle relative to the center of the output transdcuer/speaker (SPK) may be one value between two microphones and another between two other microphones Here the angle is 60 degrees between neighboring microphones.

The lines between the six microphones illustrates possible sets of two microphone combinations. As mentioned, more than two microphones may be part of a set of microphones.

Fig. 11 schematically illustrates device 200 having two output transducers and four microphones. Here the device have multiple speakers and is operated by exploiting symmetry of placement with regards to both speakers and microphones. In Fig. 11, the output transducer comprises a first speaker 210 and a second speaker 220, wherein each of the first 210 and second speakers 220 each define a output transducer center. The first speaker 210 is arranged so that a first line drawn through the first output transducer center is perpendicular to the first microphone axis, similar to the axis described above going through at least two microphones of the first set of microphones, and similar the second speaker is arranged so that a second line drawn through the second output transducer center is perpendicular to a second microphone axis. The two sets of microphones in the device 200 are also placed so that the respective microphone axis is perpendicular to the other microphone axis.

Under the condition that the two speakers 210 and 220 are playing the same, possibly synchronized, audio signal (i.e., a mono signal source, like is most often the case during conference calls), two Bi-DIRs that cancels both speakers may be formed.

Using the microphones 222 and 224, methods disclosed above may be used to form a directional canceller with a plane of cancellation in the direction of the two loudspeakers, resulting in echo being attenuated.

Using the microphones 226 and 228, methods as disclosed above may again be used to form canceller, but this will have a plane of cancellation perpendicular to the canceller of other microphones. Due to the symmetry of the speakers 210, 220 placement in the device 200 and the fact that they are playing the same audio signal, the subtraction between the microphones 226, 228 will also cancel the speaker signal.

As above, it is now possible to select between these two canceller signals, to provide the far end with the best version of the local user's voice.

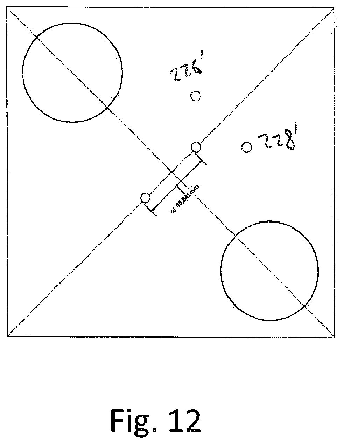

Fig. 12 schematically illustrates device having two output transducers and four microphones, where one set of microphones are shifted or sided, relative to the configuration of Fig. 11. It is thus possible to slide the microphone set 226', 228' along the symmetry axis between the speakers while still preserving the mic-speaker symmetry. This is contemplated to provide further flexibility in deciding of the device design.

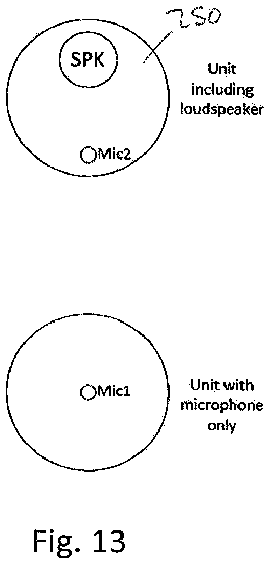

Fig. 13 schematically illustrates a device 250 having an output transducer SPK and an input transducer Mic2 and an auxiliary device having an auxiliary input transducer Mid. The signals from the two microphones Mid and Mic2 may be used to cancel the signal from the speaker SPK, as the microphone in the auxiliary device receives the same signal as the microphone in the main device, but at a much lower amplitude. This enables subtraction of the speaker signal while maintaining an omnidirectional pickup characteristic from Mid in the auxiliary device.

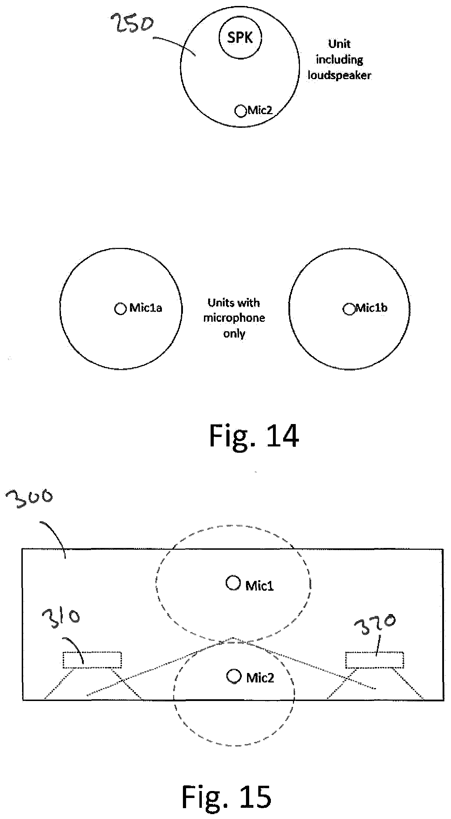

Fig. 14 schematically illustrates a device 250 having an output transducer SPK and an input transducer Mic2 and two auxiliary device 260, 270 each having an auxiliary input transducer Micla, Mic1b. Similar, but not completely identical, to Fig. 13, the system of Fig. 14 provides cancelling patterns that cancel the signal from the output transducer in the main device. In Fig. 14, the microphone in the auxiliary device receives the same signal as the microphone in the main device, but at a much lower amplitude. This enables subtraction of the speaker signal while maintaining an omnidirectional pickup characteristic from the either one or both of the two Micla andM1b in the auxiliary devices. The device may choose to use either one of the two signals from the auxiliary devices or a combination thereof.

This is an expansion of system of Fig. 13, where there are now two auxiliary units without speakers. Besides that, the functionality has not changed as each additional microphone unit comes with an additional echo canceller.

The systems illustrated in Figs. 13 and 14 may include wired or wireless connection between the components, i.e. between the device and the one or two auxiliary devices and/or between the two auxiliary devices. The device 250

Fig. 15 schematically illustrates a device 300 having two output transducers/speakers 310, 320 and an input transducer comprising two microphones Mid, Mic2 arranged between the two output transducers 310, 320. The device of Fig. 15 could be a soundbar or videophone that has two speakers placed symmetrically on the front, and a housing which may be configured to be hung from a wall or from a display device or be part of a display device or be positioned on a table. The device 300 of Fig. 15 is seen from above. On the top are placed two microphones that, by subtraction according to earlier described methods and configurations, provide a bidirectional, cancelling, input transducer with a slightly skewed pickup pattern. This bidirectional microphone will still have excellent pickup from the front while nulling out the mono-content from the speakers.

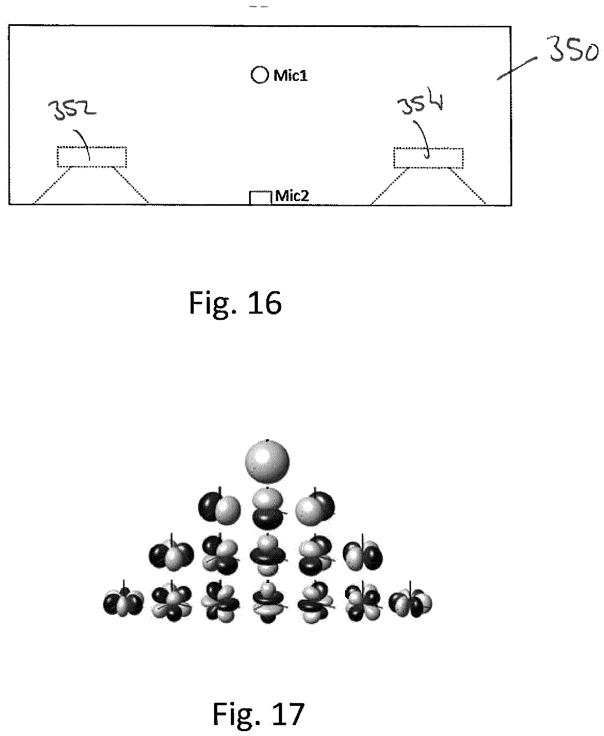

Fig. 16 schematically illustrates a device 350 similar to that of Fig. 15, having two output transducers/speakers 352, 354 and an input transducer comprising two microphones Mic1, Mic2 arranged between the two speakers 352, 354 where one microphone Mic2 is arranged at a front of the device. This is contemplated to provide enhanced sound pickup from the front of the device, e.g. during a video conference.

In both the devices of Fig. 15 and 16, it is worth considering that the cancellation patterns are three-dimensional. Fig. 17 schematically illustrates a range of different nulling planes with varying combinations of microphones.

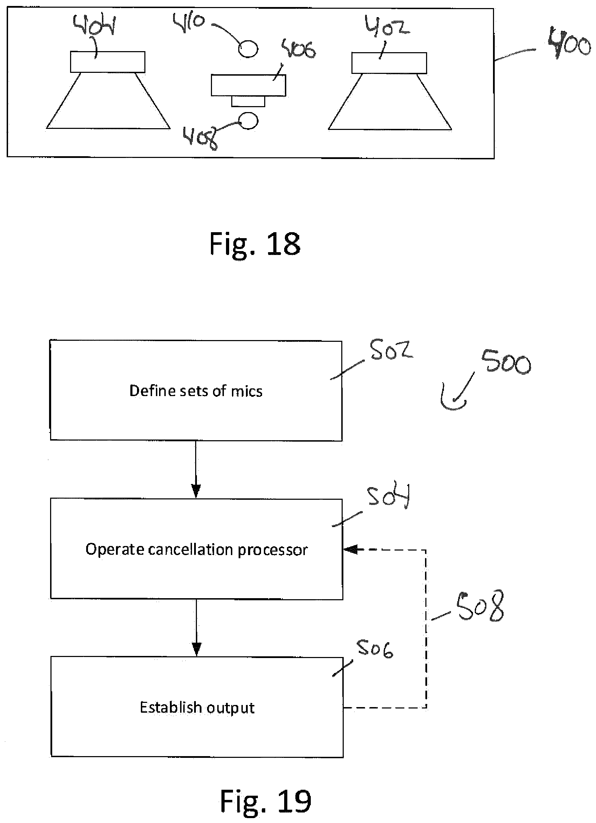

Fig. 18 schematically illustrates a videophone 400 having an optical sensor 406, two speakers 402, 404 arranged in a housing and an input transducer comprising two microphones 408, 410. The microphones 408 and 410 may be operated as discussed above.

Fig. 19 schematically illustrates steps of a method 500 of operating a device as described herein, and in particularly a device as disclosed in figs. 6 through 16 and 18. The method is preferably performed using a device having a housing wherein an input transducer and an output transducer is arranged. The input transducer preferably comprises a multitude of microphones, and the device further preferably comprises a cancellation controller operationally connected to one or more of the multitude of microphones.

The method comprises a step 502 of from the multitude of microphones, defining a first set of microphones. This may be performed when designing the device, or, may in the alternative be defined in one of a range of specific operational modes of the device, or may be defined in dependence of a current acoustic environment, such as based on present ambient sound and/or sound being output via the output transducer.

The method may comprise an additional a step of, from the multitude of microphones, defining a second set of microphones. As with the first step, this may be performed when designing the device, or, may in the alternative be defined in one of a range of specific operational modes of the device, or may be defined in dependence of a current acoustic environment, such as based on present ambient sound and/or sound being output via the output transducer.

In the method, the first set and the second set of microphones are defined so that wherein two of the first set of microphones are arranged along a first microphone axis and two of the second set of microphones are arranged along a second microphone axis. This is for instance obtainable in the device as illustrated in Fig. 6 e.g. as fixed sets, or more dynamically in a device as the one illustrated in Fig. 10. The step also apply to the other devices illustrated. The method comprises a step 504 of operating the cancellation processor to provide an output signal based on a combination of individual signals from the first set of microphones. The method is advantageous in that the operation of the cancellation processor comprises minimizing the energy from the output transducer, thereby providing a first cancellation pattern having minimized signal content from the output transducer. This is contemplated to reduce or eliminate echo in the sound picked-up by the input transducer. As indicated by the punctured line 508 going back to the previous step 504, the cancellation processor may be adapted during operation of the device. Also as indicated, a further step may be to repeat, or go back to, the definition of the first and/or second and/or additional set of microphones in 502. This need to define which microphones are part of which set may change over time as discussed or in different operational modes.

The method preferably includes establishing an output signal the is transmitted to an external device or receiver, such as a far end recipient.

It is intended that the structural features of the devices described above, either in the detailed description and/or in the claims, may be combined with steps of the method, when appropriately substituted by a corresponding process.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects. Reference to an element in the singular is not intended to mean "one and only one" unless specifically so stated, but rather "one or more." Unless specifically stated otherwise, the term "some" refers to one or more.

Accordingly, the scope should be judged in terms of the claims that follow.

## Claims

1. A device comprising an input transducer system and an output transducer:
a housing,
the input transducer system comprising a first set of microphones and a second set of microphones, the input transducer being arranged in the housing,
the output transducer being arranged in the housing, the output transducer configured to provide an acoustic signal received from a far-end source,
wherein two of the first set of microphones are arranged along a first microphone axis, wherein two of the second set of microphones are arranged along a second microphone axis,
wherein the device further comprises a cancellation controller configured to adaptively control a combination of individual signals from the set of microphones of the first set of microphones so as to adapt a first cancellation pattern, based on a combination of signals from the set of first microphones, in order to obtain a resulting signal having minimized signal content from the output transducer.

2. The device of claim 1,
wherein the cancellation controller is further configured to adaptively control a combination of individual signals from the set of microphones of the second set of microphones so as to adapt a second cancellation pattern, being located differently from the first cancellation pattern, based on a combination of signals from the set of second microphones, in order to obtain a second resulting signal having minimized signal content from the output transducer.

3. The device of claim 1 or 2, wherein the cancellation controller is configured to reduce an adaptivity rate of adapting the cancellation when speech is detected in one or more microphone signals.

4. The device according to any one of claim 1-3, where the cancellation controller is configured to initiate adaptation when signal from speaker

5. The device according to any one of claim 1-4, wherein the second microphone axis is orientated non-parallel with the first microphone axis.

6. The device according to any one of claims 1-5, wherein the first and the second set of microphones comprise at least one common microphone or does not comprise any common microphones.

7. The device according to any one of claims 1-6, wherein the cancellation controller is configured to adapt cancellation based on a correlation calculation between one or more microphone signals and a signal provided to the output transducer.

8. The device according to any one of claims 1-7, wherein one of the microphones of the set of microphones is located closer to the output transducer than the at least other microphones and the device further comprises an adaptive filter configured to process the signal from the closer microphone to ensure the amplitude of the microphone signals are equal.

9. The device according to any one of claims 1-8, wherein in the speakerphone housing, the first microphone axis is arranged perpendicular to the second microphone axis.

10. The device according to any one of claims 1-9, the output transducer defines a output transducer center, and, wherein the output transducer is arranged so that a first line drawn through the output transducer center is perpendicular to the first microphone axis and perpendicular to the second microphone axis.

11. The device according to any one of claims 1-10, wherein the device further comprises an optical sensor configured to obtain an image or video signal.

12. The device according to any one of claims 1-10, wherein the device is or comprises a video bar.

13. A method of operating a device having a housing wherein an input transducer and an output transducer is arranged, the input transducer comprising a multitude of microphones, the device further comprising a cancellation controller operationally connected to one or more of the multitude of microphones, the method comprising:
from the multitude of microphones, defining a first set of microphones,
from the multitude of microphones, defining a second set of microphones,
wherein the first set and the second set of microphones are defined so that wherein two of the first set of microphones are arranged along a first microphone axis and two of the second set of microphones are arranged along a second microphone axis,
operating the cancellation processor to provide an output signal based on a combination of individual signals from the first set of microphones, wherein the operation of the cancellation processor comprises minimizing the energy from the output transducer, thereby providing a first cancellation pattern having minimized signal content from the output transducer.

14. The method according to claim 13, wherein the step of operating the cancellation processor is repeated and/or adapted based on an analysis of signals from the input transducer.
